# EUROPÄISCHE PATENTSCHRIFT

(11) **EP 2 731 168 B1**
(45) Veröffentlichungstag und Bekanntmachung des Hinweises auf die Patenterteilung: **28.09.2016**
(21) Anmeldenummer: 14000459.9
(22) Anmeldetag: 30.09.2010
(51) Int. Cl.: H01M 2/10, H01M 2/20, H01M 10/42

(54) **Einrichtung zum elektrischen Zusammenschalten von Zellen eines Batteriepacks mittels Zellverbindern und Batteriepack mit solchen Zellverbindern**
DEVICE FOR ELECTRICALLY INTERCONNECTING CELLS IN A BATTERY PACK BY MEANS OF CELL CONNECTORS AND BATTERY PACK WITH SUCH CELL CONNECTORS
PROCÉDÉ D'INTERCONNEXION D'ÉLÉMENTS DE BLOCS-BATTERIE AU MOYEN DE BARRETTES DE LIAISON, ET BLOC-BATTERIE POURVU DE TELLES BARRETTES DE LIAISON

(30) Priorität: 01.10.2009 DE 102009043670
(43) Veröffentlichungstag der Anmeldung: 14.05.2014
(62) Teilanmeldung aus: 10767922.7
(73) Patentinhaber: Diehl Stiftung & Co. KG, 90478 Nürnberg (DE); Bayerische Motoren Werke Aktiengesellschaft, 80809 München (DE)
(72) Erfinder: Heck, Harald, 90455 Nürnberg (DE); Volek, Andreas, 91074 Herzogenaurach (DE); Hojda, Ralf, 58762 Altena (DE); Marx, Uwe, 64342 Seeheim-Jugenheim (DE); Wich, Harald, 91207 Lauf (DE); Pechloff, Rolf, 91749 Wittelshofen (DE); Warmuth, Frank, 14469 Potsdam (DE); Hopsch, Dirk, 10365 Berlin (DE); Seybold, Jörg, 91207 Lauf (DE); Goesmann, Hubertus, 89564 Auernheim (DE); Petz, Philipp, 81379 München (DE); Hauck, Axelle, 85579 Neubiberg (DE)
(74) Vertreter: Diehl Patentabteilung

(56) Entgegenhaltungen:
- EP-A2- 1 058 332
- WO-A1-2008/038916

## Beschreibung

Die Erfindung betrifft eine Einrichtung zum elektrischen Zusammenschalten von Zellen eines Batteriepacks mittels Zellverbindern und einen Batteriepack, insbesondere als Energiespeicher für die elektromotorische Traktion und stationäre Anwendungen, gemäß dem jeweiligen Oberbegriff der Hauptansprüche.

Zellverbinder sind aus der WO 2009/080148 A2 bekannt in Form eines an beiden Stirnenden gelochten, massiven Hochstrom-Überbrückungsriegels zwischen einander benachbarten ungleichnamigen Zellpolen von zum Batteriepack in Serie zu schaltenden einzelnen elektrochemischen Zellen. In die Löcher jedes Zellverbinders sind Ausgleichshülsen eingesetzt, deren Außendurchmesser kleiner und deren axiale Länge größer als das jeweilige Loch ist. In diese Hülsen greifen die frei vorragenden Pole der Zellen ein. Dabei verlagert sich jede der Ausgleichshülsen innerhalb ihres Loches nach Maßgabe der fertigungsbedingten Toleranzen der Polpositionen. Anschließend werden die so individuell positionierten Ausgleichshülsen einerseits mit ihren Zellenpolen und andererseits mit dem Zellverbinder verschweißt. Infolge des Toleranzausgleiches über die zunächst noch im Zellverbinder verlagerbaren Hülsen werden die Zellen dadurch zwar ohne mechanische Krafteinleitung miteinander verschaltet; aber wegen der massiven Zellverbinder drohen doch erhebliche Zerstörungskräfte, wenn die Zellpole sich nach dem Festschweißen der Hülsen betriebserwärmungsbedingt verlagern. Auch eröffnet diese Zellverschaltung kein Batteriemanagement ohne zusätzlichen Einsatz gesondert an die Zellpole anzuschließender Mess- und Steuerleitungen.

Letztgenannter Nachteil ist in der DE 1 98 10 746 B4 durch eine Schaltungsplatine behoben. Die darauf ausgebildeten Leiterbahnen führen von den längs des Randes der Platine gelegenen Zellpolen zum mittleren Bereich der Platine, der mit einer Schaltung für das Batteriemanagement bestückt ist, und zu Shunts für einen Abgleich der Ladezustände der einzelnen Zellen untereinander sowie zu Vielfachsteckern als Datenschnittstellen. Die Leiterbahnen sind bei Platinenbohrungen kontaktgebend auf die in einer Ebene endenden Zellpole gesteckt. Durchbohrte riegelartige Zellverbinder werden auf je zwei Zellpole gesteckt, und diese zweilagige Anordnung aus Zellverbindern und darunter gelegener Schaltungsplatine wird abschließend mittels Verschraubungen an den Zellpolen gegen die Stirnenden der Zellen verspannt. Weil die Schaltungsplatine jeweils unter vielfach überbestimmter Lagerung zwischen den massiven Zellverbindern und den Zellenstirnenden starr verschraubt ist, während betriebsbedingt Erschütterungen und temperaturabhängige Kräfte von den Zellen über die Platine auf die Zellverbinder einwirken, wird für die Platine ein flexibles Material gewählt. Das beschwört aber die Gefahr von Brüchen der Leiterbahnen gerade in unmittelbarer Nachbarschaft der Polverschraubungen herauf, und somit die Gefahr des Ausfalles des gesamten Batteriepacks eines solchen Traktions-Akkumulators wegen dann nicht mehr funktionstüchtigen Batteriemanagements.

In Erkenntnis vorstehender Gegebenheiten liegt vorliegender Erfindung die technische Problemstellung zugrunde, eine bei einfach zu handhabender Polanschlusstechnologie betriebszuverlässige Einrichtung gattungsgemäßer Art anzugeben, die auch handhabungstechnisch vorteilhafte Möglichkeiten für einen Anschluss von Maßnahmen zum Batteriemanagement eröffnet.

Diese Aufgabe wird mit den Merkmalen der Hauptansprüche gelöst.

Die Zellverbinder können jeweils im Wesentlichen als flexible Bügel aus elektrisch leitendem Material ausgelegt sein, die - je nach der gegenseitigen Anordnung zweier zusammenzuschaltender Zellen z.B. in ihrem Verlauf miteinander fluchtend - in ihrem Verbindungsbereich auf einer Montageplatte aus elektrisch isolierendem Material festgelegt sein können. Jeder Bügel kann mit seinem vom Verbindungsbereich abgewandten, freien Ende auf der Montageplatte, insbesondere verschiebbar biegeelastisch, abgestützt sein. Alle an einer Montageplatte gemäß der Geometrie der Zellpolanordnung befestigten Zellverbinder können im Wesentlichen gleichzeitig mit Zellpolen verbunden werden, indem die Montageplatte mit ihren Zellverbindern auf die Zellen aufgebracht, insbesondere aufgedrückt, wird und gegebenenfalls zusätzlich verrastet oder sonstwie gehaltert wird. Erschütterungs- oder betriebstemperaturbedingte Verlagerungen bzw. Positionsänderungen der Zellpole können ausgeglichen werden. Beispielsweise können Positionsänderungen durch Versteilern oder Abflachen der Flanken beiderseits des Scheitels der elastisch nachgebenden Bügel, unter Verlagerung ihrer nach Art von Biegefedern gegen die Montageplatte abgestützten freien Enden ausgeglichen oder kompensiert werden. Möglich ist es auch, dass Positionsänderungen durch federelastische, insbesondere mäanderartige Strukturen zwischen Bügel und Verbindungs-Bereich kompensiert werden. Dadurch kann ein Einleiten zerstörungskritischer Druck- oder Biegebeanspruchungen von den Zellverbindern her über die Zellpole in die Zellen hinein wirksam vermieden werden.

Zweckmäßigerweise weist jeder Bügel, sofern vorhanden vorzugsweise in seinem von der Montageplatte abgehobenen Mitten- oder Scheitelbereich, ein Loch auf, dessen Fläche vorzugsweise kleiner als die Stirnfläche der Zellpole ist, so dass bei auf den Batteriepack aufgelegter Montageplatte der Loch-Rand auf die Stirnfläche eines Zellpols gedrückt wird. Die Montageplatte ihrerseits weist koaxial zu diesen Löchern Durchgriffsöffnungen etwas größeren Durchmessers auf, durch die hindurch die Zellverbinder-Bügel abschließend an ihren Loch-Rändern mit den Stirnflächen der Zellpole stoffschlüssig verbunden, insbesondere laserverschweißt oder verlötet werden können.

Diese, insbesondere mehrfach-bügelartig ausgebildeten, Zellverbinder werden zweckmäßigerweise aus einem Blechmaterial mit hinreichenden Feder- und Stromleitungseigenschaften, etwa aus Stahlblech oder bevorzugt aus Kupfer, einer Kupferlegierung, aus Aluminium oder einer Aluminiumlegierung hergestellt. Vorzugsweise werden die Zellverbinder unter Einbringen der Löcher ausgestanzt und, sofern erwünscht, dabei in der Umgebung beiderseits eines Loches aus ihrer ursprünglichen Ebene heraus zu den Bügeln hochgewölbt.

Vorzugsweise wird bei der Herstellung aus dem Material, z. B. dem Blechmaterial, aus welchem die Zellverbinder hergestellt werden, zugleich ein Stanzgitter von Leiterbahnen gestanzt, so dass die Leiterbahnen jeweils mit einem Ende an den Mittenbereich zwischen den Bügeln eines Zellverbinders einstückig angeschlossen bleiben. Insbesondere an weiteren Enden der Leiterbahnen können Steckerstifte, etwa für ein Batteriemanagement zum Anschluss von Mess- und Steuerschaltungen an die Zellpole ausgebildet sein.

Zusätzliche Alternativen und Weiterbildungen im Rahmen vorliegender Erfindung ergeben sich aus den weiteren Ansprüchen und, auch unter Berücksichtigung von deren Vorteilen, aus nachstehender Beschreibung bevorzugter, etwa maßstabsgerecht verkleinert skizzierter Ausführungsbeispiele. In den anliegenden Figuren zeigen:
- Fig.1: in Explosionsdarstellung einen Batteriepack aus parallel angeordneten zylindrischen Zellen mit an ihren einander gegenüberliegenden Enden austretenden und mittels flexibler Zellverbinder auf einer oberen bzw. auf einer unteren Montageplatte jeweils elektrisch in Serie geschalteten Zellpolen,
- Fig.2: die Bestückung einer (hier: unteren) Montageplatte aus Fig.1 mit ihren Zellverbindern in abgebrochener Darstellung,
- Fig.3: in Schrägansicht den Batteriepack aus den mit der (hier: oberen) Montageplatte bestückten Zellen,
- Fig.4: flexible Zellverbinder von gegenüber Fig.2 oder Fig.5 abgewandelter Längsschnitt-Geometrie,
- Fig.5: ein mit Schweiß-Anschlussstücken ausgestatteten Zellverbinder gemäß Fig.2.
- Fig. 6: eine weitere Ausgestaltung eines Zellverbinders, und
- Fig. 7: eine weitere Ausgestaltung einer Montageplatte mit Zellverbindern nach Fig. 6.

Ein Batteriepack 11 weist eine Anzahl von z.B. zylindrischen, achsparallel montierten Zellen 12 auf, deren Zellpole 13 hier an einander gegenüberliegenden Stirnenden 14 der jeweiligen Zelle 12 aus dieser austreten und dabei mit ihren Stirnflächen 26 im wesentlichen jeweils in einer oberen bzw. unteren Ebene liegen. Dabei sind die hier in zwei Reihen angeordneten Zellen 12 derart orientiert, dass an den Zellpolen 13 abwechselnde Polaritäten +/- einander benachbart sind.

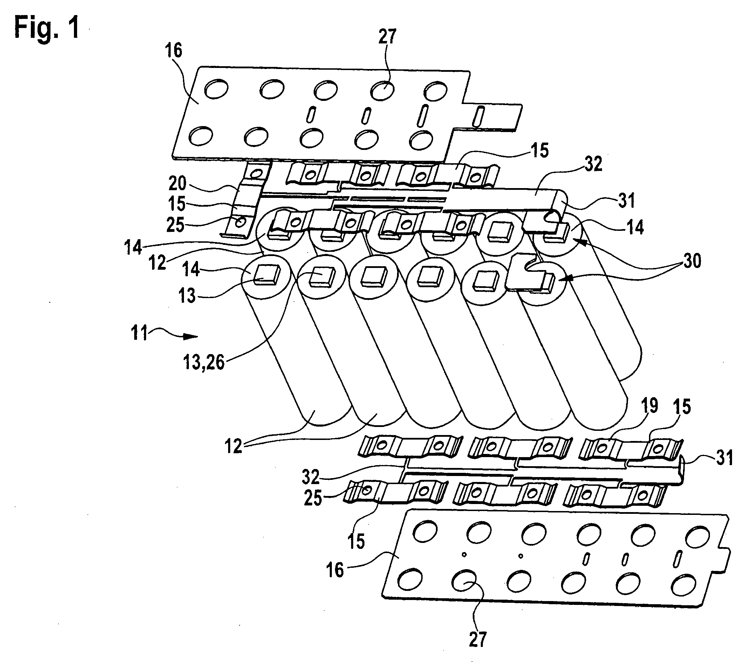

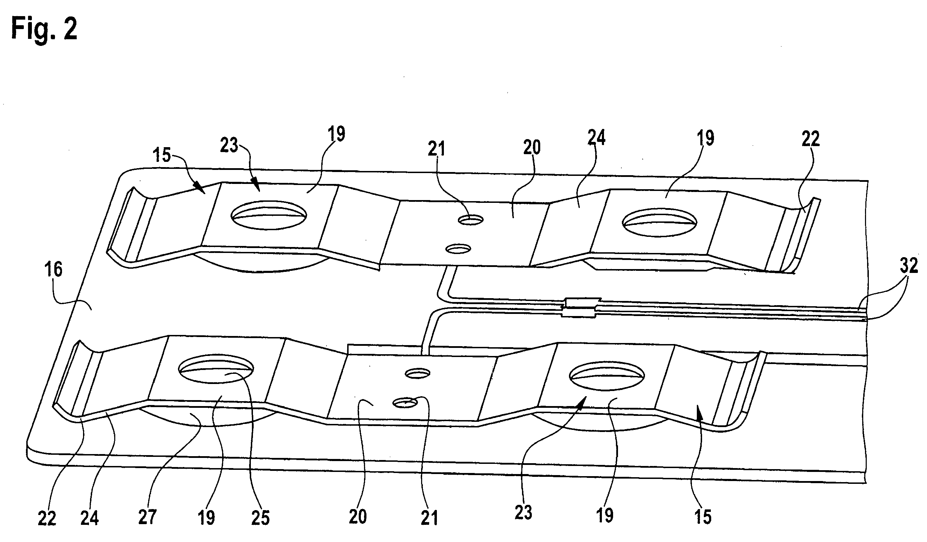

Für die nachstehend betrachtete elektrische Reihen- oder Serienschaltung der Zellen 12 zum Gewinnen deren Summenspannung als der Ausgangsspannung des Batteriepack 5 11 an seinen Batterieanschlüssen 30 sind immer zwei einander ungleichpolig +/- benachbarte dieser Zellpole 13 mittels eines flexiblen Hochstrom-Zellverbinders 15 nach der erfindungsgemäßen Einrichtung zusammengeschaltet. Diese Zellverbinder 15 sind, wie in Fig.1 skizziert, in derartiger geometrischer Abfolge auf zwei vorzugsweise im Kunststoff-Spritzguss gefertigten Montageplatten 16 elektrisch gegeneinander isoliert angeordnet (vgl. auch Fig.2), dass sie - mit Aufdrücken der Montageplatten 16 in Richtung auf die oberen bzw. unteren Stirnenden 14 der Zellen 12 - gegen die Stirnflächen 26 der Zellpole 13 zur Anlage gelangen. Mit dieser einfachen Handhabung der mit Zweibügel- Zellverbindern 15 bestückten Montageplatte 16 sind in einem Zuge bereits sämtliche Zellpole 13 eines Zellen-Stirnendes 14 elektrisch in Reihe geschaltet.

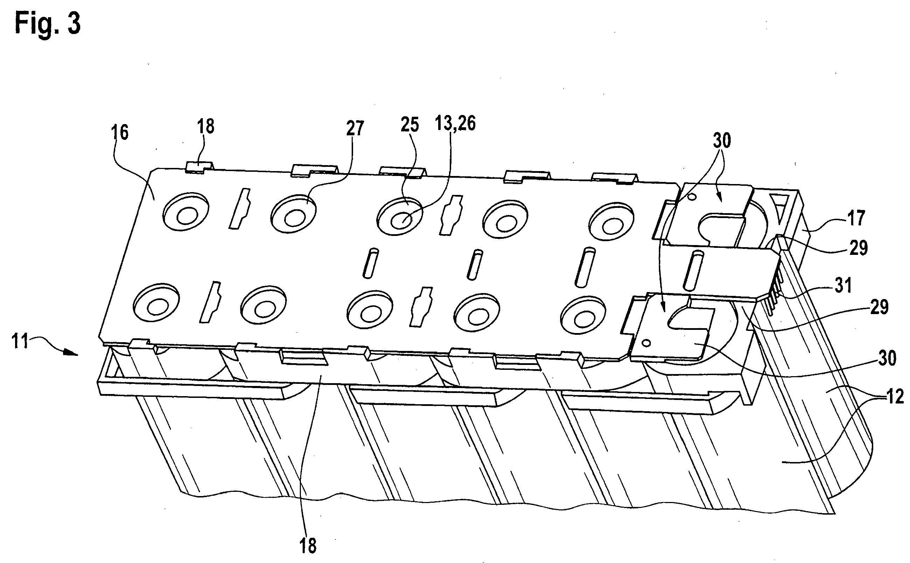

Wie aus der Ansicht der Fig.3 entnehmbar, werden die Zellen 12 an jedem beider Stirnenden 14 jeweils in einem aus elektrisch isolierendem Kunststoff formgespritzten Montagerahmen 17 form- und kraftschlüssig zum Batteriepack 11 positioniert und gehaltert. Der Montagerahmen 17 ist mit angeformten Befestigungsmitteln 18, etwa wie skizziert randseitigen Rasthaken, für die Halterung der Montageplatte 16 ausgestattet. Die ist somit lediglich, unter nachgiebiger Anlage der Zellverbinder 15 gegen die ZellpolStirnflächen 26, zwischen diese Befestigungsmittel 18 bis zum Verrasten in den Montagerahmen 17 hinein zu drücken. Das lässt sich auch unproblematisch durch einen relativ einfach ausgelegten Montageautomaten vollführen.

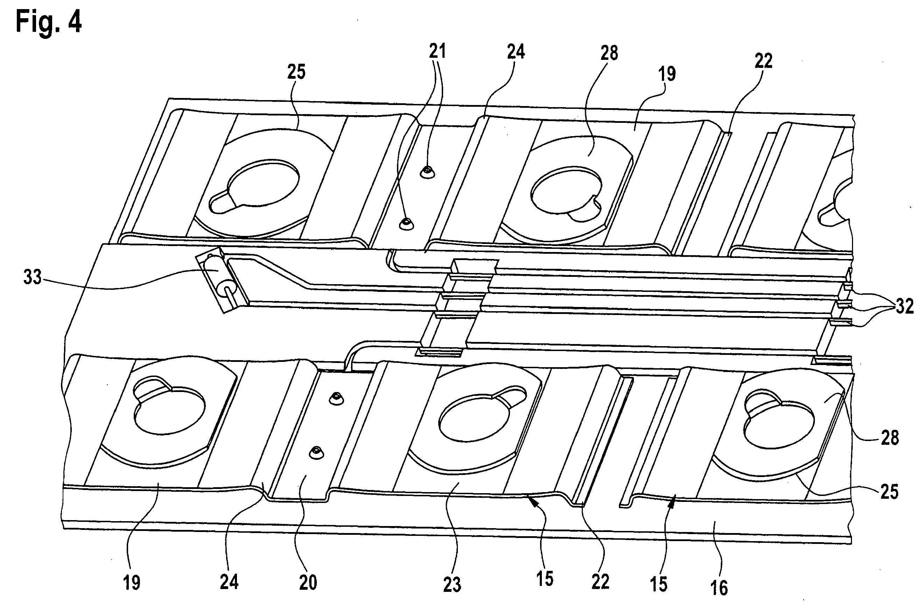

Gemäß etwa Fig.2 weist jeder Zellverbinder 15 für diese Reihenschaltungs-Anschlusstechnik zwei, hier gemäß der einander benachbarten Anordnung der ungleichpoligen Zellpole in ihrem Bügelverlauf miteinander fluchtende, aus der zellzugewandten Oberflächenebene der im Kunststoffspritzguss erstellten Montageplatte 16 elastisch vorgewölbte Bügel 19 auf. Die sind in ihrem auf der Montageplatte 16 aufliegenden Verbindungs- oder Mitten-Bereich 20 an der Montageplatte 16 festgelegt, etwa durch nietartiges Heißverstemmen von Montageöffnungen 21 durchragenden Zapfen, die (aus der Zeichnung nicht ersichtlich) auf dieser verbinderseitigen Oberfläche der Montageplatte 16 angeformt sind. Bei den beiden dem Verbindungs-Bereich 20 zwischen den Bügeln 19 gegenüberliegenden, freien Enden 22 des jeweiligen Zellverbinders 15 liegen dessen Bügel 19 gegen die Oberfläche der Montageplatte 16, sich unter Blattfederspannung abstützend, lose an. Dadurch sind sie längs dieser Oberfläche verlagerbar: Sie verschieben sich darauf bei lastabhängiger Verformung des jeweiligen Scheitelbereiches 23 der Bügel 19. Damit sich dabei keine scharfkantigen Enden 22 in den Kunststoff der Montageplatte 16 einarbeiten und dadurch schließlich das elastische Verformen eines Bügels 19 behindern oder gar blockieren, enden die freien Bügel-Enden 22 selbst zweckmäßigerweise, wie etwa aus Fig. 2 ersichtlich, von jener Auflage abstehend. Die Flanken 25 beiderseits des Scheitelbereiches 23 eines Bügels 19 können geschwungen verlaufen, oder gemäß Fig.2 abgeschrägt bzw. ähnlich Fig.4 abgestuft.

Entscheidend ist, dass die Höhe der Scheitel-Aufwölbung der Feder-Bügel 19 über die Montageplatte 16 elastisch abnimmt, wenn auf den Scheitelbereich 23 in Richtung auf die Montageplatte 16 von der Stirnfläche 26 eines Zellpols 13 her (bei der Zellverbinder-Montage, oder im Betrieb erwärmungsbedingt) zunehmend Druck ausgeübt wird.

In den Scheitelbereichen 23 der Bügel 19 eines Zellverbinders 15 sind Löcher 25 ausgebildet, deren Mittenabstand etwa dem Mittenabstand der mittels des Zellverbinders 15 zusammenzuschaltenden Zellpole 13 entspricht. Die Lochgeometrie ist kleiner als die Stirnfläche 26 des gegen das Loch 25 im Scheitelbereich 23 andrückenden Zellpols 13. Vorzugsweise handelt es sich um ein rundes Loch 25, dessen Durchmesser kleiner als die kürzeste Diagonale über der Pol-Stirnfläche 26 misst. Etwa koaxial mit jedem Loch 25 weist die Montageplatte 16 Durchgriffsöffnungen 27 auf, durch die und das Loch 25 hindurch die Stirnfläche 26 des Zellpols 13 mit dem Rand des Loches 25 dauerhaft elektrisch leitend verbunden, nämlich vorzugsweise stofflich verbunden und insbesondere laserverschweißt wird.

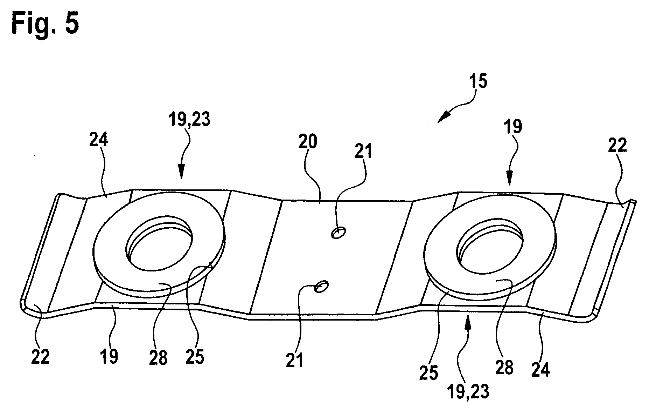

Die Zellverbinder 15 sind vorzugsweise als breite kurze Streifen aus einem Kupferlegierungsband ausgestanzt, unter Einbringen der Scheitel-Löcher 25 und der Montageöffnungen 21, hier mittig zwischen den beiden Löchern 25, sowie unter Aufwölben des jeweiligen Scheitelbereiches 23 der Bügel 19 und Abkanten der freien Bügel-Enden 22. Aus elektrochemikalischen Gründen bestehen jedoch die Zellpole 13 nicht aus Kupfer, sondern, insbesondere bei Lithium-Polymer-Akkus für Traktionszwecke, je nach elektrischer Polarität aus Aluminium bzw. aus Stahl. Für elektrisch und mechanisch zuverlässiges, sortenreines Verschweißen der Zellpole 13 mit den Zellverbindern 15 wird deshalb zweckmäßigerweise pro Bügel 19 je ein, hier etwa ringförmiges, Anschlussstück 28 aus Aluminium bzw. aus Stahl oder Nickel in die beiden Bügel-Löcher 25 kraftschlüssig eingepasst, vgl. Fig.5; jedenfalls aus einem Material, das schweißtechnologisch demjenigen der hiergegen anliegenden Zellpol-Stirnfläche 26 entspricht. Die in den Anschlussstücken 28 verbleibenden Öffnungsflächen erfüllen wieder das Kriterium, dass jeweils deren Kontur jedenfalls streckenweise über der Stirnfläche 26 des anliegenden Zellpols 13 verläuft, um hinter der Durchgriffsöffnung 27 direkt damit verschweißt werden zu können.

Die beiden nicht mit Zellverbindern bestückten Zellpole 13 am Anfang und am Ende der skizzierten Reihenschaltung sind, etwa gemäß Fig.3, durch Platten-Aussparungen 29 hindurch gemäß Fig.1 als positiver bzw. negativer Batterieanschluss 30 zugänglich.

In den Zwischenraum zwischen zwei zylindrischen Zellen 12 an einer Seite des Batteriepacks 11 tauchen, abgewinkelt aus der Ebene der Montageplatte 16, zum Anschluss von Mess- und Steuerschaltungen für das Batteriemanagement geeignete Steckerstifte 31 ein. Bei diesen handelt es sich um die freien Stirnenden von gegenüber den Streifenbreiten der Bügel 19 schmalen Leiterbahnen 32, die einstückig mit den Zellverbindern 15 ausgestanzt wurden, indem sie mit ihren den Stiften 31 gegenüberliegenden Enden an die mittleren Bereiche 20 der Zellverbinder 15 angeschlossen blieben (vgl. Fig.1). Sie verlaufen auf der bestückungsseitigen, auf die Zellpole 13 weisenden Oberfläche der Kunststoff-Montageplatte 16 und können auf dieser in angeformten Abstandshaltern festgeklemmt, also auch zur elektrischen Isolation gegeneinander distanziert sein. Bedarfsweise sind, direkt auf der Montageplatte 16, an diese zu Steckstiften 31 führende Leiterbahnen 32 oder an zusätzlich freigestanzte Leiterbahnen 32 eines derartigen Stanzgitters Bauelemente 33 (vgl. Fig.4) wie Ladungsausgleichswiderstände oder Heißleiter angeschlossen, die z.B. für das Batteriemanagement erforderlich sind.

Das skizzierte und vorstehend beschriebene Realisierungsbeispiel betrifft die wohl gängigste Konstellation, dass nebeneinander mit wechselnden Polaritäten angeordnete Zellen 12 elektrisch in Serie zu schalten sind; wofür es der Zellverbinder 15 aus linearen Anordnungen von jeweils zwei elastischen Kontaktierungs-Bügeln 19 bedarf. Bei anderen Anordnungs- oder Schaltungsvorgaben können im Rahmen vorliegender Erfindung aber auch andere Konfigurationen von Bügeln 19 zum Tragen kommen.

Jedenfalls zeichnen sich eine Einrichtung zum elektrischen Zusammenschalten von Zellen 12 eines Batteriepacks 11 mittels Zellverbindern 15 und ein Batteriepack 11 mit solchen Zellverbindern 15 dadurch als besonders montagefreundlich und funktionssicher aus, dass erfindungsgemäß wenigstens eine auf dem Batteriepack 11 in einem Montagerahmen 17 zu verrastende Montageplatte 16, nach Maßgabe der geometrischen Vorgabe von miteinander zusammenzuschaltenden Zellpolen 13, mit elektrisch gegeneinander isolierten Zellverbindern 15 bestückt ist, die jeweils flexible Bügel 19 zu elastischer Anlage ihrer Scheitelbereiche 23 gegen die Stirnflächen 26 von Zellpolen 13 aufweisen. Die Bügel 19, die mit einer Flanke biegefederartig auf die Montageplatte 16 abgestützt sind, sind Teil eines Stanzgitters, das auch einstückig damit verbundene schmale Leiterbahnen 32 etwa zum Anschluss eines Batteriemanagement umfasst. Vorzugsweise sind in die Bügel-Scheitelbereiche 23 Löcher 25 eingestanzt, längs deren Konturen die Bügel 19 nach dem Aufsetzen der Montageplatte 16 auf die Zellen 12 mit den Zellpol-Stirnflächen 26 stoffschlüssig verbunden, insbesondere laserverschweißt sind. Dafür weist die Montageplatte 16 koaxial zu jenen Löchern 25, dagegen größere, Durchgriffsöffnungen 27 auf.

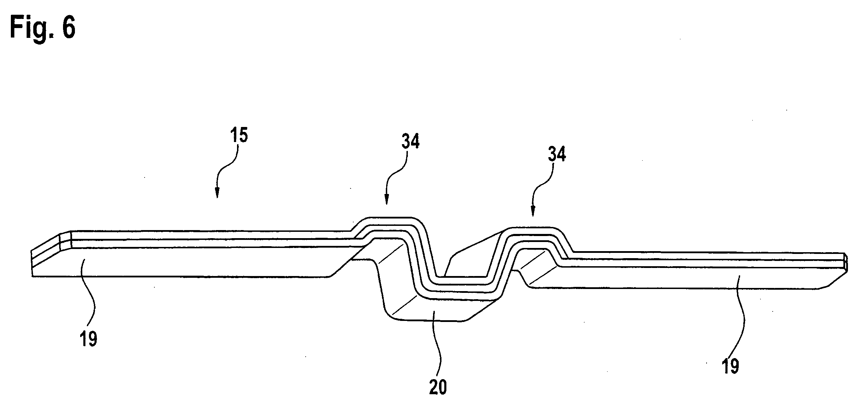

Fig. 6 zeigt eine weitere Ausgestaltung eines Zellverbinders 15 mit zwei von einem Verbindungs-Bereich 20 sich weg erstreckenden Bügeln 19. Die Bügel 19 weisen, ähnlich zu der vorweg beschriebenen Ausgestaltung, in Bereichen zur Kontaktierung mit Zellpolen Löcher 25 auf.

Die Bügel 19 der vorliegenden Ausgestaltung sind über eine durch einen mäanderartigen Verlauf federelastisch ausgebildete Struktur 34 mit dem Verbindungs-Bereich 20 gekoppelt. Auf diese Weise können thermisch oder mechanisch verursachte Relativbewegungen zwischen Zellverbinder 15 und Zellpolen kompensiert werden.

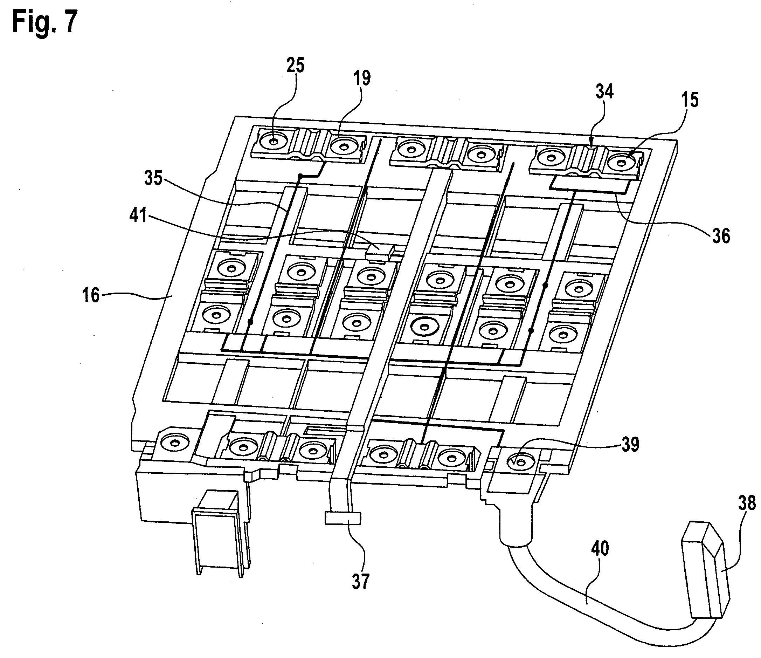

Fig. 7 zeigt eine Montageplatte 16, bei welcher es sich vorliegend vielmehr um einen Montagerahmen handelt, welche mit den im Zusammenhang mit Fig. 6 beschriebenen Zellverbindern 15 bestückt ist. Die Montageplatte 16 kann beispielsweise aus einem Kunststoff im Spritzgussverfahren, oder einem sonstigen geeigneten Material hergestellt sein. An Stellen, an welchen die Zellverbinder 15 zu liegen kommen, weist die Montageplatte 16 Ausnehmungen auf. Die Zellverbinder 15 werden mit der Montageplatte 16 verbunden, so dass die Zellverbinder zumindest größtenteils in den Ausnehmungen zu liegen kommen. Auf diese Weise liegen die Löcher 25, ggf. mit daran angebrachten Anschlussstücken, frei und können durch Aufsetzen der Montageplatte 16 auf entsprechend angeordnete und dimensionierte Zellen mit entsprechenden Zellpolen kontaktiert werden. Nach aufsetzen der Montageplatte 16 können die Zellverbinder noch mit den Zellpolen verschweißt, verlötet oder in sonstiger Weise stoff-, form- oder kraftschlüssig verbunden werden.

An den vom Verbindungs-Bereich 20 abgewandten Enden 22 der Bügel sind die Zellverbinder 15 auf der Montageplatte 16 mittels entsprechender Haltemittel gehaltert. Im gezeigten Beispiel sind die Zellverbinder mittels von der Montageplatte 16 überstehenden Zungen und ggf. in der Montageplatte 16 vorhandenen Nuten, klemmend gehaltert. Andere Befestigungsverfahren kommen alternativ oder zusätzlich in Betracht, wie beispielsweise eine Heißverstemmung, Verschraubung, Verklebung usw.

Auf den die Ausnehmungen trennenden Stegen der Montageplatte 16 sind erste Leiterbahnen 35 angebracht, durch welche die Zellverbinder 15 elektrisch miteinander derart verbunden sind, dass die Zellen des Batteriepacks in gewünschter Weise miteinander verschaltet werden. Ferner sind auf der Montageplatte 16 zweite Leiterbahnen 36 angebracht, welche ebenfalls mit zumindest einigen der Zellverbinder 15 kontaktiert sind, und als Mess- und Diagnoseleitungen verwendet werden können. Die zweiten Leiterbahnen 36 können beispielsweise dazu verwendet werden, über entsprechende Mess- und Diagnosegeräte, Parameter, insbesondere Betriebsparameter, der Zellen zu messen oder zu ermitteln. Die ersten 35 und zweiten Leiterbahnen 36 sind über elektrische Steckverbindungen 37 bzw. 38 kontaktierbar, welche entweder unmittelbar an die Leiterbahnen angeformt sein können, wie im Falle der Steckverbindung 37, oder, ggf. über entsprechende Zwischenkontaktflächen 39 und Kabelverbindungen 40, mit den Leiterbahnen verbunden sein können, wie im Falle der Steckverbindung 38.

Auf der Montageplatte 16 kann des Weiteren zumindest ein Temperatursensor 41, beispielsweise ein NTC-Temperatursensor (Negative Temperature Coefficient Temperatursensor) angebracht sein, so dass die Temperatur, insbesondere die Betriebstemperatur, des Batteriepacks erfasst werden kann. Im Falle kritischer Temperaturwerte können entsprechende Maßnahmen zur Vermeidung von temperaturbedingten Beschädigungen des Batteriepacks eingeleitet werden. Der Temperatursensor 41 kann beispielsweise über zweite Leiterbahnen 36 kontaktiert sein, und eine Erfassung und Überwachung der Temperatur kann beispielsweise über ein über die Steckverbindung 37 angeschlossenes Mess- oder Diagnosegerät erfolgen.

### Bezugszeichenliste

- 11: Batteriepack (aus 12)
- 12: Zelle (für 11)
- 13: Zellpole (von 12, aus 14)
- 14: Stirnenden (von 12)
- 15: Zellverbinder (über 13)
- 16: Montageplatte (für 15, 32)
- 17: Montagerahmen (auf 12 für 16)
- 18: Befestigungsmittel (an 17 für 16)
- 19: Bügel (von 15)
- 20: Bereich (zwischen 19-19)
- 21: Montageöffnung (in 20)
- 22: Ende (von 15/19)
- 23: Scheitelbereich (von 19, zwischen 24-24)
- 24: Flanken (von 19, beiderseits 23)
- 25: Loch (in 23)
- 26: Stirnfläche (von 13)
- 27: Durchgriffsöffnung (in 16)
- 28: Anschlussstück (in 25)
- 29: Aussparung (an 16)
- 30: Batterieanschluss (bei 29)
- 31: Steckerstifte (am Ende von 32)
- 32: Leiterbahnen (einstückig an 15)
- 33: Bauelement (an 32)
- 34: mäanderförmige Struktur
- 35: erste Leiterbahn
- 36: zweite Leiterbahn
- 37, 38: Steckverbindungen
- 39: Zwischenkontaktfläche
- 40: Kabelverbindung
- 41: Temperatursensor

## Patentansprüche

1. Einrichtung zum elektrischen Zusammenschalten von Zellen (12) eines Batteriepacks (11) mittels Zellverbindern (15), **dadurch gekennzeichnet, dass** auf einer Montageplatte (16) elektrisch gegeneinander isoliert mehrere Zellverbinder (15) zur Verbindung zumindest zweier Zellpole angebracht sind, wobei die Montageplatte (16) mit einem Stanzgitter aus Zellverbindern (15) und zumindest einer, einstückig mit diesen verbundenen, dagegen schmalen Leiterbahn (32) bestückt ist.

2. Einrichtung nach dem vorangehenden Anspruch, **dadurch gekennzeichnet, dass**, jeder Zellverbinder (15) zumindest einen sich von einem Verbindungs-Bereich (20) weg erstreckenden flexiblen Bügel (19) aufweist.

3. Einrichtung nach dem vorangehenden Anspruch, **dadurch gekennzeichnet, dass** die flexiblen Bügel, vorzugsweise mit ihren Scheitelbereichen (23), von der Montageplatte (16) distanziert sind.

4. Einrichtung nach dem vorangehenden Anspruch, **dadurch gekennzeichnet, dass** jeder der Zellverbinder (15) im Verbindungs-Bereich (20) zwischen zwei Bügeln (19) auf der Montageplatte (16) gehaltert ist.

5. Einrichtung nach einem der zwei vorangehenden Ansprüche, **dadurch gekennzeichnet, dass** die Bügel (19) jeweils ihrem Verbindungs-Bereich (20) abgewandt, bei den Bügel-Enden (22), vorzugsweise sich federelastisch abstützend auf der Montageplatte aufliegen oder gehaltert, insbesondere klemmend gehaltert, werden.

6. Einrichtung nach einem der vorangehenden Ansprüche, **dadurch gekennzeichnet, dass** jeder Bügel (19) in einem zur Verbindung mit einem Zellpol ausgebildeten Kontaktierungsbereich ein Loch (25) aufweist.

7. Einrichtung nach Anspruch 3 und dem vorangehenden Anspruch, **dadurch gekennzeichnet, dass** das Loch (25) im Scheitelbereich (23) des Bügels (19) ausgebildet ist.

8. Einrichtung nach einem der beiden vorangehenden Ansprüche, **dadurch gekennzeichnet, dass** die Montageplatte (27) zumindest in denjenigen Kontaktierungsbereichen, in welchen im befestigten Zustand der Zellverbinder (15) die Löcher (25) der Bügel (19) gelegen sind, eine Durchgriffsöffnung (27) aufweist.

9. Einrichtung nach einem der drei vorangehenden Ansprüche, **dadurch gekennzeichnet, dass** die Kontur des Loches (25) zumindest streckenweise über eine an einem Bügel (19) anliegende Stirnfläche (26) eines Zellpols hinweg verläuft.

10. Einrichtung nach einem der vier vorangehenden Ansprüche, **dadurch gekennzeichnet, dass** die Löcher (25) eines Zellverbinders (15), vorzugsweise darin eingepasste, Anschlussstücke (28) aufweisen, wobei deren Materialien vorzugsweise derart gewählt sind, dass sie mit Materialien der an sie zur Anlage gelangenden Stirnflächen (26) der Zellpole in einem Fügeverfahren, insbesondere einem Heißfügeverfahren wie Schweißen, Löten oder einem Kaltfügeverfahren, insbesondere kraft- und/oder stoffschlüssig, miteinander verbindbar sind.

11. Einrichtung nach einem der vorangehenden Ansprüche, **dadurch gekennzeichnet, dass** das Stanzgitter aus Kupfer, einer Kupferlegierung, aus Aluminium oder einer Aluminiumlegierung gefertigten gefertigt ist.

12. Einrichtung nach einem der beiden vorangehenden Ansprüche, **dadurch gekennzeichnet, dass** zumindest eine der zumindest einen Leiterbahn (32) ein als Steckerstift (31) ausgebildetes Ende aufweist.

13. Einrichtung nach einem der vorhergehenden Ansprüche, **dadurch gekennzeichnet, dass** der Zellverbinder (15) aus Kupfer oder einer Kupferlegierung, aus Aluminium oder einer Aluminiumlegierung gefertigt ist, und wobei deren Kontaktierungsbereiche zu Zellpolen, insbesondere das Anschlussstück, aus Kupfer, einer Kupferlegierung, aus Aluminium, einer Aluminiumlegierung, aus Stahl, Nickel oder einer Nickellegierung gefertigt sind.

14. Batteriepack (11) umfassend zumindest eine Einrichtung nach wenigstens einem der vorangehenden Ansprüche sowie mit der zumindest einen Einrichtung zusammengeschaltete Zellen (12), **dadurch gekennzeichnet, dass** die Zellen (12) in einem Montagerahmen (17) gruppiert sind, der mit Befestigungsmitteln (18) für eine Montageplatte (16) ausgestattet ist, die mit einem Stanzgitter aus Zellverbindern (15) bestückt ist, welche mit elastisch verformbaren Bügeln (19) gegen die Stirnflächen (26) von zusammenzuschaltenden Zellpolen (13) anliegen.

15. Batteriepack nach dem vorangehenden Anspruch, **dadurch gekennzeichnet, dass** die Stirnflächen (26) jeweils mit dem Rand eines Loches (25), vorzugsweise im Bügel-Scheitelbereich (23), kraftschlüssig und/oder stoffschlüssig verbunden, insbesondere verschweißt, insbesondere laserverschweißt oder verlötet, sind.

16. Batteriepack nach einem der beiden vorangehenden Ansprüche, **dadurch gekennzeichnet, dass** er zumindest einen Steckerstift (31) aufweist, bei welchem es sich um ein freies Ende einer Leiterbahn (32) eines an der Montageplatte (16) befestigten Stanzgitters handelt, wobei die Leiterbahnen vorzugsweise die einstückig mit den Zellverbindern (15) ausgebildet sind.

17. Batteriepack nach dem vorangehenden Anspruch, **dadurch gekennzeichnet, dass** auf der Montageplatte (16) an die Leiterbahn (32) angeschlossene Bauelemente (33) angebracht sind.

## Claims

1. Device for electrical interconnection of cells (12) of a battery pack (11) by means of cell connectors (15), **characterized in that** a plurality of cell connectors (15) for connection of at least two cell poles are fitted on a mounting plate (16), electrically isolated from one another, wherein the mounting plate (16) is fitted with a stamped grid of cell connectors (15) and at least one conductor track (32) which is connected integrally thereto and is in contrast narrow.

2. Device according to the preceding claim, **characterized in that** each cell connector (15) has at least one flexible bracket (19) which extends away from a connection area (20).

3. Device according to the preceding claim, **characterized in that** the flexible brackets, preferably with their apex areas (23), are at a distance from the mounting plate (16).

4. Device according to the preceding claim, **characterized in that** each of the cell connectors (15) is held on the mounting plate (16) between two brackets (19) in the connection area (20).

5. Device according to one of the two preceding claims, **characterized in that** the brackets (19) each rest or are held, in particular held in a clamping manner, on the mounting plate, preferably supported resiliently, at the bracket ends (22), in each case remote from the connection area (20) of said brackets (19).

6. Device according to one of the preceding claims, **characterized in that** each bracket (19) has a hole (25) in a contact-making area which is designed for connection to a cell pole.

7. Device according to Claim 3 and the preceding claim, **characterized in that** the hole (25) is formed in the apex area (23) of the bracket (19).

8. Device according to one of the two preceding claims, **characterized in that** the mounting plate (27) has an aperture opening (27) at least in those contact-making areas in which the holes (25) in the brackets (19) are located when the cell connectors (15) are in the attached state.

9. Device according to one of the three preceding claims, **characterized in that**, at least in places, the contour of the hole (25) runs out beyond an end surface (26) of a cell pole, which end surface (26) rests on a bracket (19).

10. Device according to one of the four preceding claims, **characterized in that** the holes (25) in a cell connector (15) have connecting pieces (28), which are preferably fitted therein, with the materials thereof preferably being chosen such that they can be connected to one another, in particular in a force-fitting and/or integral manner, to materials of the end surfaces (26), which make contact with them, of the cell poles in a joining process, in particular a hot joining process such as welding, soldering or a cold joining process.

11. Device according to one of the preceding claims, **characterized in that** the stamped grid is manufactured manufactured from copper, a copper alloy, from aluminium or an aluminium alloy.

12. Device according to one of the two preceding claims, **characterized in that** at least one of the at least one conductor track (32) has an end which is in the form of a plug pin (31).

13. Device according to one of the preceding claims, **characterized in that** the cell connector (15) is manufactured from copper or a copper alloy, from aluminum or an aluminum alloy, and with the contact-making areas thereof to cell poles, in particular the connecting piece, being manufactured from copper, a copper alloy, from aluminum, an aluminum alloy, from steel, nickel or a nickel alloy.

14. Battery pack (11) comprising at least one device according to at least one of the preceding claims and having cells (12) which are interconnected to the at least one device, **characterized in that** the cells (12) are grouped in a mounting frame (17), which is equipped with attachment means (18) for a mounting plate (16) which is fitted with a stamped grid of cell connectors (15) which have elastically deformable brackets (19) which rest against the end surfaces (26) of interconnected cell poles (13).

15. Battery pack according to the preceding claim, **characterized in that** the end surfaces (26) are each connected, in particular welded, in particular laser-welded or soldered, in a force-fitting and/or integral manner to the edge of a hole (25), preferably in the bracket apex area (23).

16. Battery pack according to one of the two preceding claims, **characterized in that** the battery pack has at least one plug pin (31), which is a free end of a conductor track (32) of a stamped grid which is attached to the mounting plate (16), with the conductor tracks preferably being formed integrally with the cell connectors (15).

17. Battery pack according to the preceding claim, **characterized in that** components (33) which are connected to the conductor track (32) are fitted on the mounting plate (16).

## Revendications

1. Dispositif d'interconnexion électrique de cellules (12) d'un bloc-batterie (11) au moyen de connecteurs de cellules (15), **caractérisé en ce que** plusieurs connecteurs de cellules (15) pour la connexion d'au moins deux pôles de cellules sont montés sur une plaque de montage (16) de manière électriquement isolée les uns par rapport aux autres, la plaque de montage (16) étant garnie d'une grille estampée, constituée de connecteurs de cellules (15), et d'au moins une piste conductrice (32) connectée d'une seule pièce à ceux-ci, et étroite par rapport à eux.

2. Dispositif selon la revendication précédente, **caractérisé en ce que** chaque connecteur de cellules (15) présente au moins un étrier flexible (19) s'étendant à partir d'une région de connexion (20).

3. Dispositif selon la revendication précédente, **caractérisé en ce que** les étriers flexibles, de préférence avec leurs régions de sommet (23), sont espacés de la plaque de montage (16).

4. Dispositif selon la revendication précédente, **caractérisé en ce que** chacun des connecteurs de cellules (15) est fixé sur la plaque de montage (16) dans la région de connexion (20) entre deux étriers (19).

5. Dispositif selon l'une quelconque des deux revendications précédentes, **caractérisé en ce que** les étriers (19), à chaque fois à distance de leur région de connexion (20), reposent au niveau des extrémités d'étriers (22), de préférence en s'appuyant élastiquement par ressort sur la plaque de montage, ou y sont fixés, notamment fixés par serrage.

6. Dispositif selon l'une quelconque des revendications précédentes, **caractérisé en ce que** chaque étrier (19) présente un trou (25) dans une région de contact réalisée pour la connexion à un pôle de cellule.

7. Dispositif selon la revendication 3 et la revendication précédente, **caractérisé en ce que** le trou (25) est réalisé dans la région de sommet (23) de l'étrier (19).

8. Dispositif selon l'une quelconque des deux revendications précédentes, **caractérisé en ce que** la plaque de montage (27) présente une ouverture de passage (27) au moins dans les régions de contact dans lesquelles les trous (25) des étriers (19) sont percés dans l'état fixé des connecteurs de cellules (15).

9. Dispositif selon l'une quelconque des trois revendications précédentes, **caractérisé en ce que** le contour du trou (25) s'étend au moins en partie au-delà d'une face frontale (26) d'un pôle de cellule s'appliquant contre un étrier (19).

10. Dispositif selon l'une quelconque des quatre revendications précédentes, **caractérisé en ce que** les trous (25) d'un connecteur de cellules (15) présentent des éléments de raccordement (28), de préférence ajustés dans ceux-ci, leurs matériaux étant de préférence choisis de telle sorte qu'ils puissent être connectés entre eux avec des matériaux des faces frontales (26) des pôles de cellules venant en appui contre eux dans un procédé d'assemblage, en particulier un procédé d'assemblage à chaud tel que le soudage, le brasage ou un procédé d'assemblage à froid, notamment par engagement par force et/ou par liaison de matière.

11. Dispositif selon l'une quelconque des revendications précédentes, **caractérisé en ce que** la grille estampée est fabriquée en cuivre, en alliage de cuivre, en aluminium ou en alliage d'aluminium.

12. Dispositif selon l'une quelconque des deux revendications précédentes, **caractérisé en ce qu'**au moins l'une des au moins une piste conductrice (32) présente une extrémité réalisée sous forme de fiche de connexion (31).

13. Dispositif selon l'une quelconque des revendications précédentes, **caractérisé en ce que** le connecteur de cellules (15) est fabriqué en cuivre ou en alliage de cuivre, en aluminium ou en alliage d'aluminium, et ses régions de contact avec les pôles de cellules, en particulier la pièce de raccordement, sont fabriquées en cuivre, en alliage de cuivre, en aluminium, en alliage d'aluminium, en acier, en nickel ou en alliage de nickel.

14. Bloc-batterie (11) comprenant au moins dispositif selon au moins l'une quelconque des revendications précédentes, ainsi que des cellules (12) interconnectées au moyen de l'au moins un dispositif, **caractérisé en ce que** les cellules (12) sont regroupées dans un cadre de montage (17), qui est muni de moyens de fixation (18) pour une plaque de montage (16), qui est garnie d'une grille estampée, constituée de connecteurs de cellules (15), lesquels s'appliquent avec des étriers déformables élastiquement (19) contre les faces frontales (26) de pôles de cellules (13) devant être interconnectés.

15. Bloc-batterie selon la revendication précédente, **caractérisé en ce que** les faces frontales (26) sont connectées à chaque fois avec le bord d'un trou (25), de préférence dans la région du sommet des étriers (23), par engagement par force et/ou par liaison de matière, en particulier par soudage, en particulier par soudage laser ou par brasage.

16. Bloc-batterie selon l'une quelconque des deux revendications précédentes, **caractérisé en ce qu'**il présente au moins une fiche de connexion (31) qui est en l'occurrence une extrémité libre d'une piste conductrice (32) d'une grille estampée fixée sur la plaque de montage (16), les pistes conductrices étant réalisées de préférence d'une seule pièce avec les connecteurs de cellules (15).

17. Bloc-batterie selon la revendication précédente, **caractérisé en ce que** des composants (33) raccordés à la piste conductrice (32) sont montés sur la plaque de montage (16).
